# EUROPÄISCHE PATENTSCHRIFT

(11) **EP 3 139 482 B1**
(45) Veröffentlichungstag und Bekanntmachung des Hinweises auf die Patenterteilung: **24.06.2020**
(21) Anmeldenummer: 16180483.6
(22) Anmeldetag: 21.07.2016
(51) Int. Cl.: H02M 1/42, H02M 1/36, H02M 1/32

(54) **PFC-SCHALTUNG UND VERFAHREN ZUM BETREIBEN EINER PFC-SCHALTUNG**
PFC CIRCUIT AND METHOD FOR OPERATING A PFC CIRCUIT
CIRCUIT PFC ET SON PROCÉDÉ DE FONCTIONNEMENT

(30) Priorität: 27.07.2015 DE 102015214154
(43) Veröffentlichungstag der Anmeldung: 08.03.2017
(73) Patentinhaber: Tridonic GmbH & Co KG, 6851 Dornbirn (AT)
(72) Erfinder: Auer, Hans, 6850 Dornbirn (AT); Dalby, Paul, Middlesbrough, Cleveland TS5 7LP (GB)
(74) Vertreter: Rupp, Christian

(56) Entgegenhaltungen:
- EP-A1- 2 871 760
- WO-A1-2014/158162
- DE-A1-102013 107 772
- US-A1- 2007 145 956

## Beschreibung

Die Erfindung betrifft eine aktiv getaktete Leistungsfaktorkorrektur-Schaltung, englisch: power factor correction circuit, kurz: PFC-Schaltung, sowie ein Verfahren zum Betreiben einer PFC-Schaltung. Erfindungsgemäß sind aktive PFC-Schaltungen vorgesehen.

Der Leistungsfaktor, englisch: power factor, ist das Verhältnis zwischen der Wirkleistung, also der an einen Ausgang übertragenen Leistung, und der Scheinleistung, der tatsächlich aus der Netzversorgung entnommenen Leistung, also dem Produkt aus effektiver Netzspannung und effektivem Netzstrom. Der Leistungsfaktor ist somit ein Maß dafür, wie effektiv die elektrische Energie genutzt wird. Ein höherer Leistungsfaktor stellt also eine höhere Nutzung der elektrischen Energie dar und letztendlich auch den höheren Wirkungsgrad einer Schaltung.

Der Leistungsfaktor ist eine dimensionslose Zahl zwischen 0 und 1, wobei 1 der bestmögliche Leistungsfaktor einer Schaltung ist. Je niedriger der Leistungsfaktor ist, desto größer wird die aus dem Netz entnommene Energie. Wenn ein geringer Leistungsfaktor nicht korrigiert wird, muss zusätzlich zur reellen Wirkleistung eine mit Verlust behaftete Blindleistung in Kauf genommen werden.

Aktive PFC-Schaltungen werden häufig dann verwendet, wenn eine Eingangswechselspannung bereitgestellt wird, aber ein mit Gleichspannung zu versorgende Last betrieben werden soll. Das Umsetzen einer Wechselspannung in eine Gleichspannung verringert den Leistungsfaktor auf ca. 0,5. Beispielsweise wird eine PFC-Schaltung in einer Treiberschaltung für Leuchtmittel, beispielsweise Leuchtdioden, Gasentladelampen oder dergleichen, eingesetzt. Diese PFC-Schaltung ist beispielsweise Teil eines elektronischen Vorschaltgeräts für Leuchtmittel.

Das Dokument US2007145956 offenbart einen Hochsetzsteller mit Leistungsfaktorkorrektur-Schaltung; das Dokument DE102013107772 offenbart ein Verfahren zum Hochfahren einer Wandler/PFC-Stufe eines elektrischen Leistungswandlers auf eine Normausgangsspannung.

In dem Dokument WO 2012/146701 A1 wird beispielsweise eine PFC-Schaltung beschrieben. Als PFC-Schaltung wird dabei ein Konverter bestehend aus einer Spule, einer Diode und einem Schaltelement verwendet. Das Schaltelement wird mittels eines Schaltsignals geschaltet. Das Schaltsignal wird von einer Steuereinheit bereitgestellt.

Mittels des Schaltsignals wird das Schaltelement entweder aktiviert oder deaktiviert. Bei aktiviertem Schaltelement wird die Spule mit einem Bezugspotential verbunden, wobei der Stromfluss durch die Spule ansteigt. Bei deaktiviertem Schaltelement wird die Spule mit einem Ausgang der PFC-Schaltung verbunden, wodurch der Stromfluss durch die Spule abfällt. Im deaktivierten Zustand des Schaltelements wird der Strom durch die Freilaufdiode geleitet und ein Ausgangskondensator der PFC-Schaltung aufgeladen. Durch Einstellen der Einschaltzeit beziehungsweise der Ausschaltzeit des Schaltelements kann nun der Leistungsfaktor der PFC-Schaltung verändert werden.

Derartige Konverter überwachen die Höhe der Ausgangsspannung mittels eines Rückführsignals. Ist die überwachte Ausgangsspannung unterhalb eines Schwellwerts, so wird von einem Fehlbetrieb der PFC-Schaltung ausgegangen.

Zur Vermeidung einer Zerstörung der PFC-Schaltung aufgrund eines Fehlbetriebs wird die Ausgangsspannung der PFC-Spannung mit einem Schwellwert verglichen. Ergibt der Vergleich, dass die Ausgangsspannung der PFC-Schaltung unterhalb des Schwellwerts ist, so wird von einem Fehlbetrieb ausgegangen und eine Abschaltprozedur der PFC-Schaltung eingeleitet.

Bei einer derartigen Überwachung der Ausgangsspannung bleibt in nachteiliger Weise unberücksichtigt, dass auch eine Leitung für das Rückführsignal der PFC-Schaltung zum Detektieren der PFC-Ausgangsspannung defekt sein kann oder Störungen aufweisen kann. Ein derartiger Defekt der Rückführsignalleitung könnte dazu führen, dass die PFC-Schaltung in einem Betriebsmodus arbeitet, in welchem sie sich selbst zerstört oder nachfolgende Schaltungskomponenten und/oder der zu versorgende Verbraucher, beispielsweise ein Leuchtmittel, mit einer zu hohen Spannung bzw. einer zu niedrigen Spannung versorgt, wodurch diese Komponenten oder Verbraucher zerstört oder beschädigt werden könnten.

Es ist daher Aufgabe der hier vorliegenden Erfindung, eine PFC-Schaltung sicherer zu betreiben. Insbesondere ist der Eintritt in eine gefährliche Betriebsphase der PFC-Schaltung zu unterbinden. Die PFC-Schaltung soll dabei kostengünstig herstellbar sein und ausfallsicher sein.

Die gestellte Aufgabe wird mit den in den unabhängigen Patentansprüchen 1 oder 8 beschriebenen Merkmalen gelöst.

Vorteilhafte Ausgestaltungen werden in den jeweils davon abhängige Patentansprüchen beschreiben.

Die Aufgabe wird insbesondere durch ein Verfahren gemäß Anpruchs 1 zum Betreiben einer PFC-Schaltung gelöst.

Gemäß dem erfindungsgemäßen Verfahren wird vor dem Anschalten des Schaltsignals geprüft, ob der Ausgangswert der PFC-Schaltung höher ist als der erste Schwellwert. Erst wenn festgestellt wurde, dass der Ausgangswert oberhalb des ersten Schwellwerts liegt, wird ein Schaltsignal an das Schaltelement der PFC-Schaltung angelegt und somit die Leistungsfaktorkorrektur gestartet.

Der Ausgangswert ist bevorzugt eine Ausgangsspannung oder ein Ausgangsstrom der PFC-Schaltung. Dieser Ausgangswert wird nachfolgenden Schaltungskomponenten bereitgestellt. Der Begriff Schwellwert wird hierbei insbesondere im Vergleich mit einer Spannung verwendet, sodass der Schwellwert ein Spannungsschwellwert ist. Alternativ oder zusätzlich können auch Ströme miteinander verglichen werden, wobei dann der Schwellwert ein Stromschwellwert ist.

Die Versorgungspannung ist beispielsweise eine Wechselspannung die über einen Gleichrichter in eine Gleichspannung umgesetzt wird. Solange die PFC-Schaltung ohne ein PFC-Schaltsignal mit Versorgungsspannung versorgt ist, liegt am Ausgang der PFC-Schaltung eine Ausgangsspannung an, die im Wesentlichen dem Spitzenwert der gleichgerichteten angelegten Versorgungsspannung entspricht. Ohne PFC-Schaltsignal ist die Leistungsfaktorkorrektur also nicht aktiv. Dabei entspricht der Scheitelwert der gleichgerichteten Versorgungsspannung dem PFC-Ausgangssignal.

Das PFC-Ausgangsignal wird über eine Rückführsignalleitung geführt, um den Vergleich mit dem ersten Schwellwert durchführen zu können. Liegt der PFC-Ausgangswert oberhalb des ersten Schwellwerts, so ist die Leitung des Rückführsignals nicht unterbrochen oder kurzgeschlossen. Eine Zerstörung der PFC-Schaltung aufgrund einer defekten Rückführsignalleitung kann somit als Fehlerfall ausgeschlossen werden, denn erst bei fehlerhafter Signalrückführung kann die PFC-Schaltung in einen Betriebsmodus eintreten, in dem sie sich selbst zerstört und/oder nachfolgende Schaltungskomponenten unter- bzw. überversorgt. Auf diese Weise kann ein Defekt in der Rückführsignalleitung erkannt und in Abhängigkeit der Höhe des PFC-Ausgangswerts entschieden werden, ob das PFC-Schaltsignal an das Schaltelement der PFC-Schaltung zum Starten der Leistungsfaktorkorrektur angelegt werden kann.

Insbesondere ist die PFC-Schaltung ein Hochsetzsteller, auch Boost-Konverter genannt. Die Erfindung befasst sich somit mit dem Problem, dass beim Start einer aktiven PFC-Schaltung eine Rückführsignalleitung zum Zurückführen des Ausgangswerts der PFC-Schaltung beschädigt oder defekt ist. Diese Beschädigung liegt beispielsweise bei einem Kurzschluss- oder Unterbrechungsfehler in der Rückführsignalleitung vor. Dann besteht die Gefahr, dass aufgrund eines fehlerhaft zurückgeführten PFC-Ausgangswerts das Schaltsignal der PFC-Schaltung fehlerhaft eingestellt wird, beispielsweise durch zulange Anschaltzeiten oder zu lange Ausschaltzeiten des Schaltelements. Dann wird in einem ersten Fehlerfall ein zu hoher PFC-Ausgangswert durch die PFC-Schaltung generiert, wodurch eine Beschädigung des elektronischen Vorschaltgeräts, oder zumindest Teile der PFC-Schaltung, insbesondere des Speicherkondensators am Ausgang der PFC-Schaltung, erfolgen kann. In einem zweiten Fehlerfall wird ein zu geringer PFC-Ausgangswert durch die PFC-Schaltung generiert, wodurch eine Beschädigung nachfolgender Schaltungsteile, insbesondere eines mit der PFC-Schaltung betriebenen Leuchtmittels, erfolgen kann.

Zur Lösung dieses Problems wird nunmehr unmittelbar nach Einschalten bzw. Anlegen der Versorgungsspannung für die PFC-Schaltung, allerdings vor dem Anschalten des PFC-Schaltsignals, geprüft, ob ein Ausgangswert an einer Steuereinheit der PFC-Schaltung anliegt, der bei ausgeschaltetem PFC-Schaltsignal dem Scheitelwert der angelegten gleichgerichteten Versorgungsspannung entsprechen sollte oder in einem Toleranzbereich um diesen Scheitelwert liegt.

In einer bevorzugten Ausgestaltung wird nach dem Anschalten des PFC-Schaltsignals der Ausgangswert der PFC-Schaltung mit einem zweiten Schwellwert verglichen, wobei eine Sicherheitsabschaltung aktiviert wird, wenn der Ausgangswert der PFC-Schaltung unterhalb eines zweiten Schwellwerts liegt. Der Vergleich dieser PFC-Schaltung mit einem zweiten Schwellwert entspricht der Abschaltbedingung um einer PFC-Schaltung ein kontrolliertes Abschalten zu ermöglichen. Beim kontrollierten Abschalten wird die PFC-Schaltung mit einem Schaltsignal betrieben, mit welchem der Speicherkondensator der PFC-Schaltung nicht überladen wird oder der PFC-Ausgangswert nicht zu schnell minimiert wird, wodurch das Leuchtmittel ggf. beschädigt würde.

Bevorzugt ist der erste Schwellwert ein Spannungswert oberhalb von null Volt oder ein Stromwert oberhalb von null Ampere. Damit ist sichergestellt, dass die Rückführsignalleitung in der PFC-Schaltung nicht kurzgeschlossen oder überbrückt ist. Insbesondere der Kurzschluss oder die Überbrückung würde ohne das erfindungsgemäße Verfahren dazu führen, dass ein zu geringer Ausgangswert vermutet würde, obwohl tatsächlich ein normaler Ausgangswert anliegt. Eine Regelung durch die Steuereinheit würde dazu führen, dass der Ausgangswert absinkt und möglicherweise die Last unterversorgt, was bei Leuchtmitteln zur Zerstörung führen kann.

In einer bevorzugten Ausgestaltung wird eine PFC-Ausgangsspannung als Ausgangswert der PFC-Schaltung verglichen. Bevorzugt erhält die Steuereinheit innerhalb der PFC-Schaltung ein Rückführsignal, welches einem definierten Teil der PFC-Ausgangsspannung entspricht. Die Rückführung erfolgt somit über einen Spannungsteiler, wodurch der Vergleichswert entsprechend anzupassen ist.

In einer bevorzugten Ausgestaltung wird zwischen dem Vergleich des Ausgangswerts mit dem ersten Schwellwert und dem Vergleich des Ausgangswerts mit dem zweiten Schwellwert eine vordefinierte Wartezeitspanne abgewartet. Die vordefinierte Wartezeitspanne kann mittels der Steuereinheit konfiguriert werden und ist abzuwarten, bevor der Vergleich des PFC-Ausgangswerts mit dem ersten Schwellwert erfolgt. Diese vordefinierte Wartezeitspanne entspricht beispielswiese einem Einschwingvorgang der PFC-Schaltung nach Anlegen der Netzversorgungspannung.

Bevorzugt liegt der erste Schwellwert unterhalb des zweiten Schwellwerts. Der zweite Schwellwert entspricht bevorzugt einem Spannungswert oder einem Stromwert oberhalb des Scheitelwerts der gleichgerichteten Netzspannung oder des gleichgerichteten Netzstroms. Somit ist ein Schwellwertbereich zwischen dem ersten Schwellwert und dem zweiten Schwellwert definiert, in welchem die PFC-Schaltung funktioniert und keinen Betriebsmodus aufweist, in dem andere Schaltungskomponenten oder die PFC-Schaltung selbst beschädigt oder gar zerstört werden. Der Ausgangswert der PFC-Schaltung muss oberhalb des ersten Schwellwerts liegen, solange das PFC-Schaltsignal deaktiviert ist. Der Ausgangswert der PFC-Schaltung muss oberhalb des zweiten Schwellwerts liegen, solange das PFC-Schaltsignal aktiviert ist.

Unabhängig davon wird weiterhin die Sicherheitsabschaltung der PFC-Schaltung durchgeführt, falls der Ausgangswert der PFC-Schaltung nach dem Anschalten des PFC-Schaltsignals nicht oberhalb des zweiten Schwellwerts liegt. Wenn der Ausgangswert nach Anschalten des PFC-Schaltsignals der PFC-Schaltung zu gering ist, besteht die Gefahr, dass nachfolgende Schaltstufen innerhalb eines elektronischen Vorschaltgeräts beschädigt werden.

Bevorzugt ist der zweite Schwellwert eine Schwellwertspannung oberhalb des Scheitelwertes der gleichgerichteten Versorgungsspannung bei deaktiviertem Schaltsignal.

In einer bevorzugten Ausgestaltung erfolgt der Vergleich des Ausgangswerts mit dem ersten Schwellwert und/oder mit dem zweiten Schwellwert in einer Steuereinheit der PFC-Schaltung, wobei die Steuereinheit in Abhängigkeit der Vergleichsergebnisse ein Schaltsignal für die PFC-Schaltung generiert. Zum Vergleich innerhalb einer Steuereinheit muss auch das Rückführsignal der PFC-Schaltung in der Steuereinheit bereitgestellt sein, wodurch geprüft werden kann, ob die Rückführsignalleitung defekt ist.

In einem weiteren Aspekt der hier vorliegenden Erfindung wird eine PFC-Schaltung mit einem Aufwärtswandler vorgeschlagen. Diese PFC-Schaltung weist zumindest eine Spule, eine Freilaufdiode, ein Schaltelement und eine Steuereinheit auf, wobei die Steuereinheit eingerichtet ist, das vorangehend beschriebene Verfahren durchzuführen. Dabei ist die Spule an den Ausgang eines Gleichrichters angeschaltet und weist eine Serienschaltung mit der Freilaufdiode auf, um ein Ausgangssignal der PFC-Schaltung bereitzustellen. Das Schaltelement ist mit einem ersten Anschluss zwischen der Spule und der Freilaufdiode angeschaltet wohingegen das Schaltelement mit einem zweiten Anschluss mit Masse verbunden ist. Eine Steuereinheit schaltet dabei einen Steuereingang des Schaltelements. Das Schaltelement ist bevorzugt ein Halbleiterbauelement, beispielsweise ein MOSFET. Auf diese Weise wird die Rückführsignalleitung geprüft bevor die PFC-Schaltung mit einem PFC-Schaltsignal betrieben wird.

In einer bevorzugten Ausgestaltung ist eine gleichgerichtete Versorgungsspannung an die Spule angelegt, wobei die Spule zyklisch mittels der Freilaufdiode entladen wird.

In einer bevorzugten Ausgestaltung ist die Steuereinheit in der PFC-Schaltung vorgesehen, um ein Schaltsignal zu generieren, mit welchem das Schaltelement geschaltet wird, um ein zyklisches Entladen der Spule zu steuern, wobei die Steuereinheit nach Anlegen der gleichgerichteten Eingangsspannung das PFC-Schaltsignal erst an das Schaltelement bereitstellt, wenn ein Ausgangswert der PFC-Schaltung oberhalb eines ersten Schwellwerts liegt. Auf diese Weise wird die Rückführung der PFC-Schaltung geprüft um festzustellen, ob beispielsweise eine Unterbrechung, eine Überbrückung oder ein Kurzschluss innerhalb der Rückführsignalleitung vorliegt, was die PFC-Schaltung möglichweise in einen unkontrollierten Zustand bringen würden.

In einer bevorzugten Ausgestaltung vergleicht die Steuereinheit nach dem Anschalten des PFC-Schaltsignals den Ausgangswert der PFC-Schaltung mit einem zweiten Schwellwert, wobei die Steuereinheit eine Sicherheitsabschaltung aktiviert für den Fall, dass der Ausgangswert der PFC-Schaltung unterhalb eines zweiten Schwellwerts liegt. Auf diese Weise wird eine Sicherheitsabschaltung erwirkt, sollte ein zu geringer PFC-Ausgangswert generiert werden. Auf diese Weise werden nachfolgende Schaltelemente in einem elektronischen Vorschaltgerät vor einer Zerstörung geschützt.

Bevorzugt liegt zwischen dem Vergleich des Ausgangswerts der PFC-Schaltung mit dem ersten Schwellwert und dem Vergleich des Ausgangswerts der PFC-Schaltung mit dem zweiten Schwellwert eine vordefinierte Wartezeit.

Bevorzugt ist die Versorgungsspannung mittels einer Gleichrichterschaltung gleichgerichtet, um einen Kondensator auf den Scheitelwert der gleichgerichteten Versorgungsspannung aufzuladen. Die Gleichrichterschaltung ist dabei in Abhängigkeit der Anforderungen an die PFC-Schaltung bevorzugt als Brückengleichrichter, als Halbbrückenschaltung, als Synchrongleichrichter oder dergleichen ausgebildet.

Bevorzugt wird die PFC-Schaltung in einem elektronischen Vorschaltgerät für Leuchtmittel eingesetzt.

Nachfolgend wird anhand von Figuren die Erfindung beziehungsweise weitere Ausführungsformen und Vorteile der Erfindung näher erläutert, wobei die Figuren lediglich Ausführungsbeispiele der Erfindung beschreiben. Gleiche Bestandteile in den Figuren werden mit gleichen Bezugszeichen versehen. Die Figuren sind nicht als maßstabsgetreu anzusehen, es können einzelne Elemente der Figuren übertrieben groß bzw. übertrieben vereinfacht dargestellt sein.

Es zeigen:
- Fig. 1: ein Ablaufdiagramm für ein Verfahren zum Betreiben einer PFC-Schaltung gemäß dem Stand der Technik;
- Fig. 2: ein beispielhaftes Ablaufdiagramm für ein erfindungsgemäßes Verfahren zum Betreiben einer PFC-Schaltung;
- Fig.3: ein Ausführungsbeispiel einer erfindungsgemäßen PFC-Schaltung;
- Fig.4: beispielhafte Signalzeitverläufe und Schwellwerte zum erfindungsgemäßen Betreiben einer PFC-Schaltung.

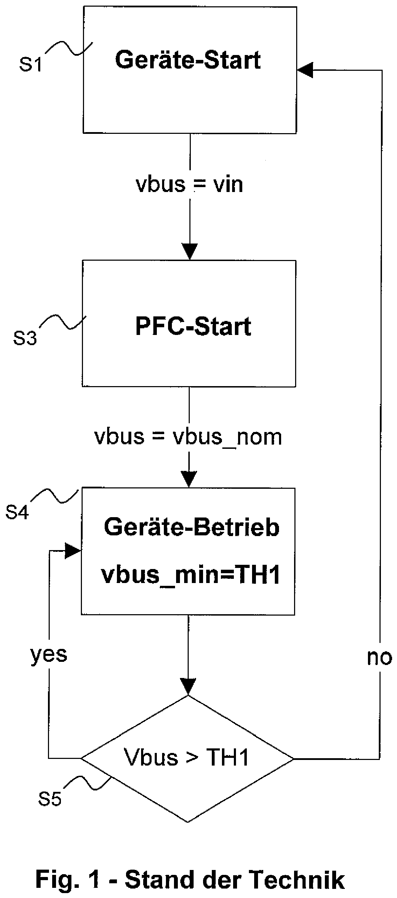

In Fig. 1 ist ein Verfahrensablaufdiagramm zum Betreiben einer PFC-Schaltung 1 gemäß dem Stand der Technik dargestellt. Dabei wird in einem Schritt S1 eine Versorgungsspannung an die PFC-Schaltung 1 angelegt. Diese ist gleichbedeutend mit dem Geräte-Start eines elektronischen Vorschaltgeräts. Bei korrektem Betrieb stellt sich am PFC-Ausgang eine Ausgangsspannung V_{Bus} ein, die dem Scheitelwert der gleichgerichteten Versorgungsspannung Vᵢₙ entspricht. Gemäß dem Stand der Technik wird im Schritt S3 die PFC-Schaltung 1 gestartet, indem das PFC-Schaltsignal clk an ein Schaltelement M1 angelegt wird. Es stellt sich eine Ausgangsspannung V_{Bus} ein, die einer nominalen Ausgangsspannung V_{Bus_nom} der PFC-Schaltung 1 entspricht. Im Schritt S4 wird sodann stets überprüft ob die minimale Ausgangsspannung V_{Bus_min} der PFC-Schaltung 1 einem Schwellwert TH1 entspricht. Der Schwellwert TH1 wird nachfolgend als zweiter Schwellwert TH1 bezeichnet. Ist die PFC-Ausgangsspannung V_{Bus} größer als der zweite Schwellwert TH1, so befindet sich die PFC-Schaltung 1 in einem ordnungsgemäßen Betrieb. Ist die PFC-Ausgangsspannung V_{Bus} kleiner als dieser zweite Schwellwert TH1 wird die PFC-Schaltung 1 durch eine Sicherheitsabschaltung deaktiviert. Der Schwellwert TH1 entspricht bei Vergleich von Spannungswerten einem Spannungsschwellwert.

Gemäß dem Stand der Technik folgt auf den Gerätestart gemäß Schritt S1 sogleich die Anschaltung des PFC-Schaltsignals clk an das Schaltelement M1. Sollte die Rückführsignalleitung der PFC-Schaltung 1 fehlerhaft sein, beispielsweise durch Kurzschluss oder Unterbrechung, so wird das durch diesen Verfahrensablauf nicht detektiert. In diesem Fall besteht also die Gefahr, dass die PFC-Ausgangsspannung nicht korrekt erfasst wird und das PFC-Schaltsignal clk der PFC-Schaltung 1 eine zu hohe PFC-Ausgangsspannung V_{Bus} oder eine zu niedrige PFC-Ausgangsspannung V_{Bus} einstellt, was aufgrund der fehlerhaften Rückführsignalleitung unentdeckt bleibt. Dies führt möglicherweise zu einer Beschädigung der PFC-Schaltung 1 und/oder nachfolgender Schaltungskomponenten, beispielsweise des Speicherkondensators 2 oder eines zu versorgenden Leuchtmittels am Ausgang der PFC-Schaltung 1.

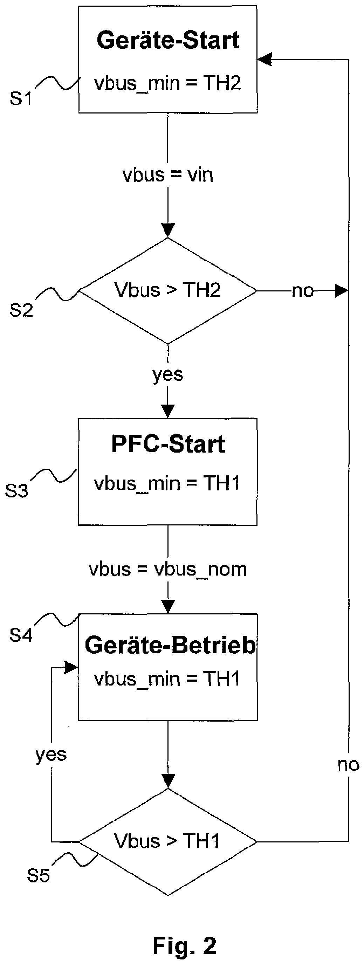

In Fig. 2 ist nun ein beispielhaftes Ablaufdiagramm eines erfindungsgemäßen Verfahrens zum Betreiben einer PFC-Schaltung 1 dargestellt. Hierbei wird im Schritt S1 eine Versorgungsspannung an die PFC-Schaltung angelegt. Damit wird eine PFC-Ausgangsspannung V_{Bus} eingestellt, die einem Scheitelwert der gleichgerichteten Versorgungsspannung Vin entspricht. Im Unterschied zum Verfahren gemäß der Fig. 1 wird nun in einem Verfahrensschritt S2 verglichen, ob die Ausgangsspannung V_{Bus} größer ist als eine erste Schwellspannung TH2 ist. Ist dies nicht der Fall, so wird von einem Defekt der Rückführsignalleitung oder der PFC-Schaltung 1 ausgegangen und das PFC-Schaltsignal Clk nicht angeschaltet. Die PFC-Schaltung 1 wird deaktiviert.

Wird dementgegen festgestellt, dass die Ausgangsspannung V_{Bus} größer ist als die erste Schwellspannung TH2, so erfolgt das Anschalten eines PFC-Schaltsignals CLK an das Schaltelement M1 im Verfahrensschritt S3. Es stellt sich dann eine Ausgangsspannung V_{Bus} ein, die einer nominalen Ausgangsspannung V_{Bus_nom} der PFC-Schaltung 1 entspricht. Im Schritt S4 wird sodann stets überprüft ob die minimale Ausgangsspannung V_{Bus_min} der PFC-Schaltung 1 einem zweiten Schwellwert TH1 entspricht. Ist die PFC-Ausgangsspannung V_{Bus} größer als der zweite Schwellwert TH1, so befindet sich die PFC-Schaltung 1 in einem ordnungsgemäßen Betrieb.

Ist die PFC-Ausgangsspannung V_{Bus} kleiner als dieser zweite Schwellwert TH1, so wird die PFC-Schaltung 1 durch eine Sicherheitsabschaltung deaktiviert. Der erste Schwellwert TH2 und der zweite Schwellwert TH1 entsprechen bei Vergleich von Spannungswerten einem Spannungsschwellwert.

Unmittelbar nach dem Anlegen S1 der Versorgungsspannung Vᵢₙ für die PFC-Schaltung 1 allerdings vor dem Anschalten S2 des PFC-Schaltsignals clk an das PFC-Schaltelement M1 der PFC-Schaltung 1 wird geprüft, ob eine Steuereinheit CTL an einem Rückführsignaleingang die PFC-Ausgangsspannung V_{Bus} erfassen kann, die vor dem Anschalten S2 dem Scheitelwert der gleichgerichteten Versorgungsspannung Vin entsprechen muss, bzw. innerhalb eines Toleranzbereichs dieses Scheitelwerts liegen muss. Nur wenn vor dem Anschalten S2 des PFC-Schaltsignals clk der PFC-Schaltung 1 diese Ausgangsspannung V_{Bus} erfasst werden kann, wird die Steuereinheit CTL das PFC-Schaltsignal clk an das PFC-Schaltelement M1 anschalten.

Unabhängig davon besteht weiterhin eine Sicherheitsabschaltung, falls die gemessene Ausgangsspannung V_{Bus} auch nach dem Start des PFC-Schaltsignals clk der PFC-Schaltung 1 nicht oberhalb des zweiten Schwellwerts TH1 liegt. Wenn die Ausgangsspannung V_{Bus} bei Anliegen des Schaltsignals clk der PFC-Schaltung 1 geringer ist als eine minimale Ausgangsspannung V_{Bus_min}, besteht die Gefahr, dass nachfolgende Schaltstufen innerhalb eines elektronischen Vorschaltgeräts beschädigt werden.

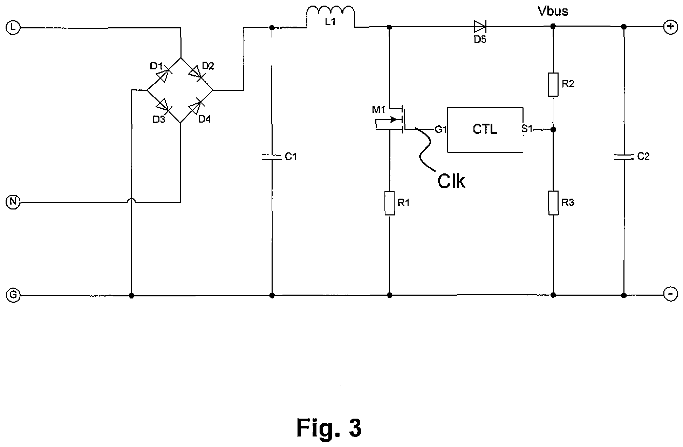

In Fig. 3 ist ein Ausführungsbeispiel einer erfindungsgemäßen PFC-Schaltung 1 dargestellt. Dabei wird über die Eingangsanschlüsse L, N, G eine Versorgungsspannung Vin an einen Gleichrichter bestehend aus vier Dioden D1, D2, D3, D4 angelegt. Die vier Dioden D1 bis D4 bilden einen Brückengleichrichter, um die angelegte AC-Versorgungsspannung Vᵢₙ in eine Gleichspannung umzuwandeln. Der Kondensator C1 ist der Gleichrichterschaltung nachgeschaltet, um auf einen Scheitelwert der gleichgerichteten Versorgungsspannung Vin aufgeladen zu werden. Dem Ladekondensator C1 nachgeschaltet ist eine Aufwärtswandlerstufe bestehend aus einer Spule L1, einer Freilaufdiode D5 sowie einem Schaltelement M1. Dabei ist die Spule L1 mit einem ersten Anschluss mit dem Speicherkondensator C1 verbunden. Der zweite Anschluss der Spule L1 ist mit der Anode der Freilaufdiode D5 verbunden. Die Kathode der Freilaufdiode D5 ist mit einem Ausgangspin der Schaltung 1 verbunden. An der Kathode der Freilaufdiode D5 kann die PFC-Ausgangsspannung V_{Bus} abgegriffen werden. An der Anode der Freilaufdiode D5 ist ein Schaltelement M1 mit einem ersten Anschluss angeschlossen. Ein zweiter Anschluss des Schaltelements M1 ist über einen Widerstand R1 mit einem Bezugspotential G verbunden. Das Schaltelement M1 ist ein Feldeffekttransistor, der mittels eines PFC-Schaltsignals clk einer Steuereinheit CTL aktiviert oder deaktiviert wird.

Die PFC-Ausgangsspannung V_{Bus} wird über einen Spannungsteiler bestehend aus den Widerständen R2 und R3 an einer Steuereinheit CTL angelegt. Die spannungsgeteilte Ausgangsspannung V_{Bus} wird in der Steuereinheit CTL mit einem ersten Schwellwert TH2 und mit einem zweiten Schwellwert TH1 verglichen. Am Ausgang der Steuereinheit CTL kann das PFC-Schaltsignal clk an das Schaltelement M1 angeschaltet werden, wenn ein Vergleich S2 innerhalb der Steuereinheit CTL ergibt, dass die Rückführsignalleitung von der Kathode der Freilaufdiode D5 zur Steuereinheit CTL nicht defekt oder fehlerhaft ist, also insbesondere nicht durch einen Kurzschluss oder eine Unterbrechung oder fehlerhafte Spannungsteilerelemente gestört ist.

Bei Anlegen der Versorgungsspannung Vᵢₙ an die PFC-Schaltung erfolgt zunächst ein Vergleich der PFC-Ausgangsspannung V_{Bus} mit einem ersten Schwellwert TH2 innerhalb der Steuereinheit CTL. Ist die PFC-Ausgangsspannung V_{Bus} größer als der erste Schwellwert TH2, der einen Spannungswert oberhalb von 0 Volt entspricht, so wird das PC-Schaltsignal clk von der Steuereinheit CTL generiert und einem Steueranschluss des Schaltelements M1 bereitgestellt. Somit wird die PFC-Schaltung 1 aktiviert und das Schaltsignal clk zum Aufwärtswandeln der gleichgerichteten Versorgungsspannung Vᵢₙ verwendet. Sodann steigt die Ausgangsspannung V_{Bus} der PFC-Schaltung 1 oberhalb des Scheitelwerts der gleichgerichteten Versorgungsspannung Vᵢₙ. Auch während des Betriebs der PFC-Schaltung 1 erfolgt ein Vergleich innerhalb der Steuereinheit CTL. Ist die PFC-Ausgangsspannung V_{Bus} kleiner als eine zweite Schwellspannung TH1, so wird eine Sicherheitsabschaltung eingeleitet, um nachfolgende Komponenten der PFC-Schaltung 1 vor einer Zerstörung oder einem Fehlbetrieb zu schützen.

Die Steuereinheit CTL generiert ein PFC-Schaltsignal clk als Pulsweitenmodulation, wobei die Anschaltzeitdauer Tₐₙ und die Ausschaltzeitdauer Tₐᵤₛ durch die Steuereinheit CTL variiert werden. Damit wird ein zyklisches Aufladen bzw. Entladen der Spule L1 gesteuert und eine Leistungsfaktorkorrektur ermöglicht.

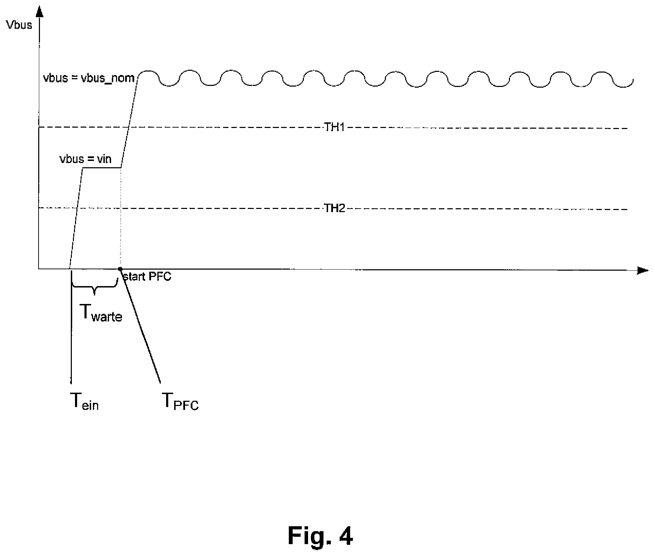

In Fig. 4 ist ein beispielhafter Verlauf der Spannung V_{Bus} einer erfindungsgemäßen PFC-Schaltung 1 über die Zeit t dargestellt. Zu einem Einschaltzeitpunkt Tₑᵢₙ wird die Versorgungsspannung Vᵢₙ an die PFC-Schaltung 1 angelegt. Ab diesem Zeitpunkt Tₑᵢₙ steigt die PFC-Ausgangsspannung V_{Bus} an bis ein Scheitelwert der gleichgerichteten Versorgungsspannung Vᵢₙ am Ausgang der PFC-Schaltung 1 eingestellt ist. Ist die Ausgangsspannung V_{Bus} höher als der erste Schwellwert TH2 wird von einem ordnungsgemäßen Betrieb der PFC-Schaltung 1 ausgegangen und insbesondere eine korrekte Signalrückführung der Ausgangsspannung V_{Bus} an die Steuereinheit CTL erkannt. Um sicherzustellen, dass der Betrieb tatsächlich ordnungsgemäß ist, wird eine vordefinierte Wartezeitspanne T_{warte} abgewartet. Fällt innerhalb dieser vordefinierten Wartezeitspanne T_{warte} die Ausgangsspannung V_{Bus} nicht unterhalb des ersten Schwellwerts TH2 ab, so wird gemäß Verfahrensschritt S3 mittels der Steuereinheit CTL ein PFC-Schaltsignal clk an das Schaltelement M1 angeschaltet. Ab diesem Zeitpunkt funktioniert die PFC-Schaltung 1 mit einer Leistungsfaktorkorrektur. Aufgrund der Anschaltung des Schaltsignals clk wird die Ausgangsspannung V_{Bus} oberhalb der gleichgerichteten Versorgungsspannung Vᵢₙ liegen. Im weiteren Betrieb der PFC-Schaltung wird geprüft, ob die nominelle Ausgangsspannung V_{Bus_nom} der PFC-Schaltung 1 oberhalb eines zweiten Schwellwerts TH2 liegt. Sobald die Ausgangsspannung V_{Bus} unterhalb des zweiten Schwellwerts TH1 liegt, wird eine Sicherheitsabschaltung der PFC-Schaltung 1 eingeleitet, wobei insbesondere ein kontrolliertes Entladen eines Ausgangskondensators C2 geprüft wird.

Alle gezeigten, beanspruchten oder beschriebenen Merkmale können beliebig miteinander kombiniert werden. Im Rahmen der vorliegenden Erfindung sind weitere Ausgestaltungen insbesondere der PFC-Schaltung gemäß Figur 3 nicht ausgeschlossen.

### Bezugszeichenliste

- 1: PFC-Schaltung
- clk: PFC-Schaltsignal
- CTL: PFC-Steuereinheit
- D1-D4: Brückengleichrichter
- D5: Freilaufdiode
- G: Referenzpotenzial
- L, N: Netzversorgungsspannung
- L1: PFC-Speicherelement
- M1: PFC-Schaltelement
- R2,R3: Spannungsteiler
- TH1: zweiter Schwellwert
- TH2: erster Schwellwert
- Tₑᵢₙ: Einschaltzeitpunkt Versorgungsspannung
- T_{PFC}: Einschaltzeitpunkt PFC-Schaltsignal
- T_{Warte}: Wartezeitspanne
- V_{Bus}: Ausgangsspannung der PFC-Schaltung
- V_{Bus_min}: Minimale Ausgangsspannung der PFC-Schaltung
- V_{Bus_nom}: Nominelle Ausgangsspannung der PFC-Schaltung
- Vᵢₙ: Versorgungsspannung
- C: Kondensator
- S1: Anlegen-Schritt
- S2: Vergleichen-Schritt (erster Schwellwert)
- S3: Schaltsignal-Anschalten-Schritt
- S4: Betreiben-Schritt
- S5: Vergleichen-Schritt (zweiter Schwellwert)

## Patentansprüche

1. Verfahren zum Betreiben einer PFC-Schaltung (1) mit den Verfahrensschritten:
- Anlegen (S1) einer Versorgungsspannung (Vᵢₙ);
- Vergleichen (S2) eines Ausgangswerts (V_{Bus}) der PFC-Schaltung (1) mit einem ersten Schwellwert (TH2); und
- Anschalten (S3) eines PFC-Schaltsignals (clk) an ein Schaltelement (M1) der PFC-Schaltung (1) zum Starten (S4) der Leistungsfaktorkorrektur für den Fall, dass der Ausgangswert (V_{Bus}) der PFC-Schaltung (1) oberhalb des ersten Schwellwerts (TH2) liegt,
wobei nach dem Anschalten-Schritt (S3) der Ausgangswert (V_{Bus}) der PFC-Schaltung (1) mit einem zweiten Schwellwert (TH1) verglichen (S5) wird und wobei eine Sicherheitsabschaltung aktiviert wird für den Fall, dass der Ausgangswert (V_{Bus}) der PFC-Schaltung (1) unterhalb des zweiten Schwellwerts (TH1) liegt.

2. Verfahren nach Anspruch 1,
wobei der erste Schwellwert (TH1) ein Spannungswert oberhalb von null Volt oder ein Stromwert oberhalb von null Ampere ist.

3. Verfahren nach einem der vorhergehenden Ansprüche,
wobei eine Ausgangsspannung (V_{Bus}) als Ausgangswert der PFC-Schaltung (1) verglichen wird, wobei die Ausgangsspannung (V_{Bus}) vorzugsweise spannungsgeteilt ist.

4. Verfahren nach einem der Ansprüche 1 bis 3,
wobei zwischen dem Vergleich (S2) des Ausgangswerts (V_{Bus}) mit dem ersten Schwellwert (TH2) und dem Vergleich (S5) des Ausgangswerts (V_{Bus}) mit dem zweiten Schwellwert (TH1) eine vordefinierte Wartezeitspanne (T_{Warte}) gewartet wird.

5. Verfahren nach einem der Ansprüche 1 bis 4,
wobei der erste Schwellwert (TH2) unterhalb des zweiten Schwellwerts (TH1) liegt.

6. Verfahren nach einem der Ansprüche 1 bis 5,
wobei der zweite Schwellwert (TH1) eine Schwellwertspannung ist, die oberhalb des Scheitelwerts der gleichgerichteten Versorgungsspannung (Vᵢₙ) bei deaktiviertem Schaltsignal (clk) ist.

7. Verfahren nach einem der vorhergehenden Ansprüche,
wobei der Vergleich (S2) des Ausgangswerts (V_{Bus}) mit dem ersten Schwellwert (TH2) und/oder mit dem zweiten Schwellwert (TH1) in einer Steuereinheit (CTL) der PFC-Schaltung (1) erfolgt und wobei die Steuereinheit (CTL) in Abhängigkeit des Vergleichsergebnisses ein Schaltsignal (clk) für das PFC-Schaltelement (M1) generiert.

8. PFC-Schaltung (1) mit einem Aufwärtswandler der zumindest aufweist eine Spule (L1), eine Freilaufdiode (D5), ein Schaltelement (M1) und eine Steuereinheit (CTL), wobei die Steuereinheit (CTL) eingerichtet ist, das Verfahren gemäß einem der vorhergehenden Ansprüche durchzuführen.

9. PFC-Schaltung (1) nach Anspruch 8,
wobei eine gleichgerichtete Versorgungsspannung (Vᵢₙ) an die Spule (L1) angelegt (S1) ist,
wobei die Spule (L1) zyklisch mittels der Freilaufdiode (D5) entladen wird.

10. PFC-Schaltung (1) nach einem der Ansprüche 8 oder 9, wobei die Steuereinheit (CTL) in der PFC-Schaltung (1) vorgesehen ist, um ein Schaltsignal (clk) zu generieren, mit welchem das Schaltelement (M1) geschaltet wird, um ein zyklisches Entladen der Spule (L1) zu steuern, wobei die Steuereinheit (CTL) nach Anlegen (S1) der gleichgerichteten Versorgungsspannung (Vᵢₙ) das PFC-Schaltsignal (clk) erst an das Schaltelement (M1) bereitstellt, wenn ein Ausgangswert (V_{Bus}) der PFC-Schaltung (1) oberhalb eines ersten Schwellwerts (TH2) liegt.

11. PFC-Schaltung (1) nach Anspruch 10,
wobei die Steuereinheit (CTL) nach dem Anschalten (S3) des PFC-Schaltsignals (clk) den Ausgangswert (V_{Bus}) der PFC-Schaltung (1) mit einem zweiten Schwellwert (TH1) vergleicht (S5) und
wobei die Steuereinheit (CTL) eine Sicherheitsabschaltung aktiviert für den Fall, dass der Ausgangswert (V_{Bus}) der PFC-Schaltung (1) unterhalb eines zweiten Schwellwerts (TH1) liegt.

12. PFC-Schaltung (1) nach Anspruch 11,
wobei zwischen dem Vergleich (S2) des Ausgangswerts (V_{Bus}) der PFC-Schaltung (1) mit dem ersten Schwellwert (TH2) und dem Vergleich (S5) des Ausgangswerts (V_{Bus}) der PFC-Schaltung (1) mit dem zweiten Schwellwert (TH1) eine vordefinierte Wartezeitspanne (T_{Warte}) liegt.

13. PFC-Schaltung (1) nach einem der Ansprüche 8 bis 12, wobei die Versorgungsspannung (Vᵢₙ) mittels einer Gleichrichterschaltung gleichgerichtet ist, um einen Kondensator (C1) auf den Scheitelwert der gleichgerichteten Versorgungsspannung (Vᵢₙ) aufzuladen.

14. PFC-Schaltung (1) nach einem der Ansprüche 8 bis 13, zum Einsatz in einem elektronischen Vorschaltgerät, bevorzugt einem elektronischen Vorschaltgerät für Leuchtmittel.

## Claims

1. Method for operating a PFC circuit (1), with the method steps:
- applying (S1) a supply voltage (Vᵢₙ);
- comparing (S2) an output value (V_{Bus}) of the PFC circuit (1) with a first threshold value (TH2); and
- activating (S3) a PFC switching signal (clk) to a switching element (M1) of the PFC circuit (1) in order to start (S4) the power factor correction if the output value (V_{Bus}) of the PFC circuit (1) is above the first threshold value (TH2)..
wherein, after the activation step (S3), the output value (V_{Bus}) of the PFC circuit (1) is compared (S5) with a second threshold value (TH1), and
wherein a safety shutdown is activated if the output value (V_{Bus}) of the PFC circuit (1) is below the second threshold value (TH1).

2. Method according to claim 1,
wherein the first threshold value (TH1) is a voltage value above zero volts or a current value above zero amperes.

3. Method according to one of the preceding claims, wherein an output voltage (V_{Bus}) is compared as an output value of the PFC circuit (1), wherein the output voltage (V_{Bus}) is preferably voltage-divided.

4. Method according to one of claims 1 through 3,
wherein a predefined waiting period (T_{Wait}) is maintained between the comparison (S2) of the output value (V_{Bus}) with the first threshold value (TH2) and the comparison (S5) of the output value (V_{Bus}) with the second threshold value (TH1).

5. Method according to one of claims 1 through 4,
wherein the first threshold value (TH2) is below the second threshold value (TH1).

6. Method according to one of claims 1 through 5,
wherein the second threshold value (TH1) is a threshold voltage which is above the peak value of the rectified supply voltage (Vᵢₙ) when the switching signal (clk) is deactivated.

7. Method according to one of the preceding claims,
wherein the comparison (S2) of the output value (V_{Bus}) with the first threshold value (TH2) and/or with the second threshold value (TH1) takes place in a control unit (CTL) of the PFC circuit (1), and wherein the control unit (CTL) generates a switching signal (clk) for the PFC switching element (M1) as a function of the comparison result.

8. PFC circuit (1) with a step-up converter, which at least has a coil (L1), a free-wheeling diode (D5), a switching element (M1), and a control unit (CTL), wherein the control unit (CTL) is designed to carry out the method according to one of the preceding claims.

9. PFC circuit (1) according to claim 8,
wherein a rectified supply voltage (Vᵢₙ) is applied (S1) to the coil (L1),
wherein the coil (L1) is cyclically discharged by means of the free-wheeling diode (D5).

10. PFC circuit (1) according to one of claims 8 or 9,
wherein the control unit (CTL) is provided in the PFC circuit (1) in order to generate a switching signal (clk) with which the switching element (M1) is switched in order to control a cyclical discharging of the coil (L1), wherein the control unit (CTL), after the rectified supply voltage (Vᵢₙ) has been applied (S1), provides the PFC switching signal (clk) to the switching element (M1) only if an output value (V_{Bus}) of the PFC circuit (1) is above a first threshold value (TH2).

11. PFC circuit (1) according to claim 10,
wherein the control unit (CTL), after the PFC switching signal (clk) has been activated (S3), compares (S5) the output value (V_{Bus}) of the PFC circuit (1) with a second threshold value (TH1), and
wherein the control unit (CTL) activates a safety shutdown if the output value (V_{Bus}) of the PFC circuit (1) is below a second threshold value (TH1).

12. PFC circuit (1) according to claim 11,
wherein there is a predefined waiting period (T_{Wait}) between the comparison (S2) of the output value (V_{Bus}) of the PFC circuit (1) with the first threshold value (TH2) and the comparison (S5) of the output value (V_{Bus}) of the PFC circuit (1) with the second threshold value (TH1).

13. PFC circuit (1) according to one of claims 8 through 12,
wherein the supply voltage (Vᵢₙ) is rectified by means of a rectifier circuit so as to charge a capacitor (C1) to the peak value of the rectified supply voltage (Vᵢₙ).

14. PFC circuit (1) according to one of claims 8 through 13 for use in an electronic ballast - preferably, an electronic ballast for lighting elements.

## Revendications

1. Procédé pour le fonctionnement d'un circuit PFC (1) présentant les étapes de procédé de :
- application (S1) d'une tension d'alimentation (Vᵢₙ) ;
- comparaison (S2) d'une valeur de départ (V_{Bus}) du circuit PFC (1) à une première valeur seuil (TH2) ; et
- connexion (S3) d'un signal de commutation PFC (clk) à un élément de commutation (M1) du circuit PFC (1) pour démarrer (S4) la correction du facteur de puissance dans le cas où la valeur de départ (V_{Bus}) du circuit PFC (1) est supérieure à la première valeur seuil (TH2
la valeur de départ (V_{Bus}) du circuit PFC (1) étant comparée (S5), après l'étape de connexion (S3), à une deuxième valeur seuil (TH1) et
une déconnexion de sécurité étant activée dans le cas où la valeur de départ (V_{Bus}) du circuit PFC (1) est inférieure à la deuxième valeur seuil (TH1).

2. Procédé selon la revendication 1,
la première valeur seuil (TH1) étant une valeur de tension supérieure à zéro volt ou une valeur de courant supérieure à zéro ampère.

3. Procédé selon l'une quelconque des revendications précédentes, une tension de départ (V_{Bus}) étant comparée en tant que valeur de départ du circuit PFC (1), la tension de départ (V_{Bus}) étant de préférence divisée en tension.

4. Procédé selon l'une quelconque des revendications 1 à 3,
une durée d'attente prédéfinie (T_{Warte}) étant respectée entre la comparaison (S2) de la valeur de départ (V_{Bus}) à la première valeur seuil (TH2) et la comparaison (S5) de la valeur de départ (V_{Bus}) à la deuxième valeur seuil (TH1).

5. Procédé selon l'une quelconque des revendications 1 à 4,
la première valeur seuil (TH2) étant inférieure à la deuxième valeur seuil (TH1).

6. Procédé selon l'une quelconque des revendications 1 à 5,
la deuxième valeur seuil (TH1) étant une tension de valeur seuil qui est supérieure à la valeur de crête de la tension d'alimentation redressée (Vᵢₙ) dans le cas du signal de commutation (clk) désactivé.

7. Procédé selon l'une quelconque des revendications précédentes,
la comparaison (S2) de la valeur de départ (V_{Bus}) à la première valeur seuil (TH2) et/ou à la deuxième valeur seuil (TH1) ayant lieu dans une unité de commande (CTL) du circuit PFC (1) et l'unité de commande (CTL) générant un signal de commutation (clk) pour l'élément de commutation PFC (M1) en fonction du résultat de la comparaison.

8. Circuit PFC (1) présentant un convertisseur élévateur qui présente au moins une bobine (L1), une diode de roue libre (D5), un élément de commutation (M1) et une unité de commande (CTL), l'unité de commande (CTL) étant conçue pour exécuter le procédé selon l'une quelconque des revendications précédentes.

9. Circuit PFC (1) selon la revendication 8,
une tension d'alimentation redressée (Vᵢₙ) étant appliquée (S1) à la bobine (L1),
la bobine (L1) étant déchargée cycliquement au moyen de la diode de roue libre (D5).

10. Circuit PFC (1) selon l'une quelconque des revendications 6 ou 9,
l'unité de commande (CTL) dans le circuit PFC (1) étant prévue pour générer un signal de commutation (clk) qui commute l'élément de commutation (M1) pour commander un déchargement cyclique de la bobine (L1), l'unité de commande (CTL) mettant à disposition, après l'application (S1) de la tension d'alimentation redressée (Vᵢₙ), le signal de commutation PFC (clk) à l'élément de commutation (M1) seulement lorsqu'une valeur de départ (V_{Bus}) du circuit PFC (1) est supérieure à une première valeur seuil (TH2).

11. Circuit PFC (1) selon la revendication 10,
l'unité de commande (CTL) comparant (S5), après la connexion (S3) du signal de commutation PFC (clk), la valeur de départ (V_{Bus}) du circuit PFC (1) à une deuxième valeur seuil (TH1) et
l'unité de commande (CTL) activant une déconnexion de sécurité dans le cas où la valeur de départ (V_{Bus}) du circuit PFC (1) est inférieure à une deuxième valeur seuil (TH1).

12. Circuit PFC (1) selon la revendication 11,
une durée d'attente prédéfinie (T_{Warte}) étant située entre la comparaison (S2) de la valeur de départ (V_{Bus}) du circuit PFT (1) à la première valeur seuil (TH2) et la comparaison (S5) de la valeur de départ (V_{Bus}) du circuit PFC (1) à la deuxième valeur seuil (TH1).

13. Circuit PFC (1) selon l'une quelconque des revendications 8 à 12,
la tension d'alimentation (Vᵢₙ) étant redressée au moyen d'un circuit redresseur, pour charger un condensateur (C1) à la valeur de crête de la tension d'alimentation redressée (Vᵢₙ).

14. Circuit PFC (1) selon l'une quelconque des revendications 8 à 13, pour une utilisation dans un ballast électronique, de préférence un ballast électronique pour des moyens d'éclairage.
